(19) **Europäisches Patentamt / European Patent Office / Office européen des brevets**

(11) **EP 3 308 983 B1**

(12) **EUROPEAN PATENT SPECIFICATION**

(45) Date of publication and mention of the grant of the patent:
**21.08.2019 Bulletin 2019/34**

(21) Application number: **16811602.8**

(22) Date of filing: **14.06.2016**

(51) Int Cl.:
**B60C 11/16** (2006.01)

(86) International application number:
**PCT/JP2016/067607**

(87) International publication number:
**WO 2016/204128 (22.12.2016 Gazette 2016/51)**

(54) **STUD AND TIRE**

**SPIKE UND REIFEN**

**CLOU ET PNEU**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2015 JP 2015120428**

(43) Date of publication of application:
**18.04.2018 Bulletin 2018/16**

(73) Proprietor: **Bridgestone Corporation Tokyo 104-8340 (JP)**

(72) Inventors:
• **SAWADA Hiroki**
**Tokyo 104-8340 (JP)**

• **KAWAMATA Satoru**
**Tokyo 104-8340 (JP)**

(74) Representative: **Oxley, Robin John George Marks & Clerk LLP 15 Fetter Lane London EC4A 1BW (GB)**

(56) References cited:
**EP-A1- 3 222 441      EP-A1- 3 287 301**
**WO-A2-2014/027145   CN-A- 101 269 613**
**JP-A- S63 242 703      JP-A- 2002 120 517**
**JP-A- 2014 180 952      RU-C1- 2 152 318**
**US-A1- 2004 231 775   US-A1- 2004 231 775**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 308 983 B1

**Description**

BACKGROUND OF THE INVENTION

1. Field of the Invention

The present invention relates to a stud to be fitted in a stud recess formed on the tread surface side of a tire and a tire having the studs fitted in the stud recesses formed on the tread surface side thereof.

2. Description of the Related Art

There is a known stud to be fitted in a stud recess (hole) formed on a surface side of the tire tread, which has a columnar body section (thick portion and neck portion), a pin section (projection) provided on one end of the body section, and a flange section (root portion) provided on the other end of the body section. And the body section, the pin section, and the flange section are respectively so formed as to have a length direction and a width direction orthogonal to the central axis thereof. And studs are fitted on the tire in such a manner that the length direction of the pin section faces in the same direction as the axial direction of the tire. As a result, the edge components of the pin section (tire axial components of the pin section) become larger when the vehicle wearing these tires travels straight ahead, thus improving the ice braking performance of the tire (see Patent Document 1).

RELATED ART DOCUMENT

Patent Document

Patent Document 1: Japanese Patent No. 4088055
Further studs according to the features of the preamble of claim 1 are disclosed in US 2004/0231775 A1, WO2014/027145 A2, EP 3 287 301 A1 and EP 3 222 441 A1 wherein the last both documents were published after the filing date of this application.

SUMMARY OF THE INVENTION

Problem to be Solved by the Invention

However, the stud as disclosed in Patent Document 1 is of such a construction that the length direction of the pin section and the length direction of the body section face in the same direction and the length direction of the pin section and the body section faces in a direction different from the length direction of the flange section. And the studs are fitted in the stud recesses in the tire in such orientation that the length direction of the pin section faces in the same direction as the axial direction of the tire, and the length direction of the flange section faces in the same direction as the circumferential direction of the tire. Consequently, the length direction of the flange section and the width direction of the body section face in the same direction as the circumferential direction of the tire.
In such a case, in the circumferential direction of the tire, there will be greater difference between the length in the length direction (major axis dimension) of the flange section and the length in the width direction (minor axis dimension) of the body section. A greater difference in axis dimension like this in the tire circumferential direction results in not only smaller contact area between the upper part (thick portion) of the body section and the wall surface (tire rubber) of the stud recess, but also larger gap between the upper part of the body section and the wall surface of the stud recess. This will make the contact area between the lower part (neck portion) of the body section and the wall surface of the stud recess smaller, which in turn will allow easier loss of the stud from the stud recess, causing a drop in the anti-stud-loss performance.
Also, to reduce the difference in axis dimension between the flange section and the body section in the tire circumferential direction, it may be conceivable to employ an arrangement using a smaller difference in axis dimension along the whole circumference of the flange section and the body section. However, there are weight regulations for the studs. And thus it is difficult to employ a smaller difference in axis dimension along the whole circumference of the flange section and the body section.
The present invention provides a stud and a tire fitted with such studs capable not only of keeping or reducing the total weight of the studs used on a tire, thus observing the stud weight regulation, but also of improving the anti-stud-loss performance. Means for Solving the Problem
A stud according to the present invention is a stud according to claim 1 to be fitted in a stud recess (hole) formed on the tread surface side of a tire. The stud has a body section in a columnar shape, a pin section disposed on one end of the body section, and a flange section disposed on the other end of the body section. And the pin section is formed in a shape having a length direction and a width direction. And the pin section, the body section, and the flange section in orthographic projection, that is, the pin section, the body section, and the flange section of the stud as viewed from one-end side in the direction along the central axis of the stud, satisfy $0 \leqq (SM/HM) < 1.0$ and $0 < (HM-SM)/FM < 0.7$ where SM is a projected area difference between the flange section and the body section in the width direction of the pin section of the stud, HM is a projected area difference between the flange section and the body section in the length direction of the pin section of the stud, which is orthogonal to the width direction of the pin section, and FM is a maximum sectional area of the flange section orthogonal to the central axis of the stud. In it, the projected area difference SM is a total projected area portion of the flange section adding up the one-end side area portion enclosed by the profile line of the flange section and the one-end side defining line parallel with the length direction of the pin section, which passes through the point of intersection of the maximum length position of the body section with the straight line in extension of the width direction of the pin section on the one-end side of the extension direction thereof, and the other-end side area portion enclosed by the profile line of the flange section and the other-end side defining line parallel with the length direction of the pin section, which passes through the point of intersection of the maximum length position of the body section with the straight line in extension of the width direction of the pin section on the other-end side of the extension direction thereof. And the projected area difference HM is a total projected area portion of the flange section adding up the one-end side area portion enclosed by the profile line of the flange section and the one-end side defining line parallel with the width direction of the pin section, which passes through the point of intersection of the maximum width position of the body section with the straight line in extension of the length direction of the pin section on the one-end side of the extension direction thereof and the other-end side area portion enclosed by the profile line of the flange section and the other-end side defining line parallel with the width direction of the pin section, which passes through the point of intersection of the maximum width position of the body section with the straight line in extension of the length direction of the pin section on the other-end side of the extension direction thereof. As a result, a stud provided is one capable not only of keeping or reducing the total weight of the studs used on a tire, thus observing the stud weight regulation, but also improving the anti-stud-loss performance.

A tire according to another embodiment of the present invention has the above-described studs fitted in stud recesses formed on the tread surface side thereof. And the width direction of the pin section of the studs faces in the same direction as the circumferential direction of the tire, and the length direction of the pin section of the studs faces in the same direction as the axial direction of the tire. Thus, the tire provided features an improved anti-stud-loss performance.

BRIEF DESCRIPTION OF THE DRAWINGS

FIG. 1 is a perspective view of a stud.
FIG. 2A is a plan view of a stud, and FIG. 2B is a front view of a stud.
FIG. 3A is an illustration for explaining a projected area difference SM of a stud. FIG. 3B is an illustration for explaining a projected area difference HM of a stud. And FIG. 3C is an illustration for explaining a maximum sectional area FM of the flange section.
FIG. 4 is a cross-sectional view showing a tire with studs fitted in stud recesses.
FIG. 5 is an illustration showing a tread surface of a tire with studs fitted in stud recesses.
FIG. 6 is a table showing the test results.

BEST MODE FOR CARRYING OUT THE INVENTION

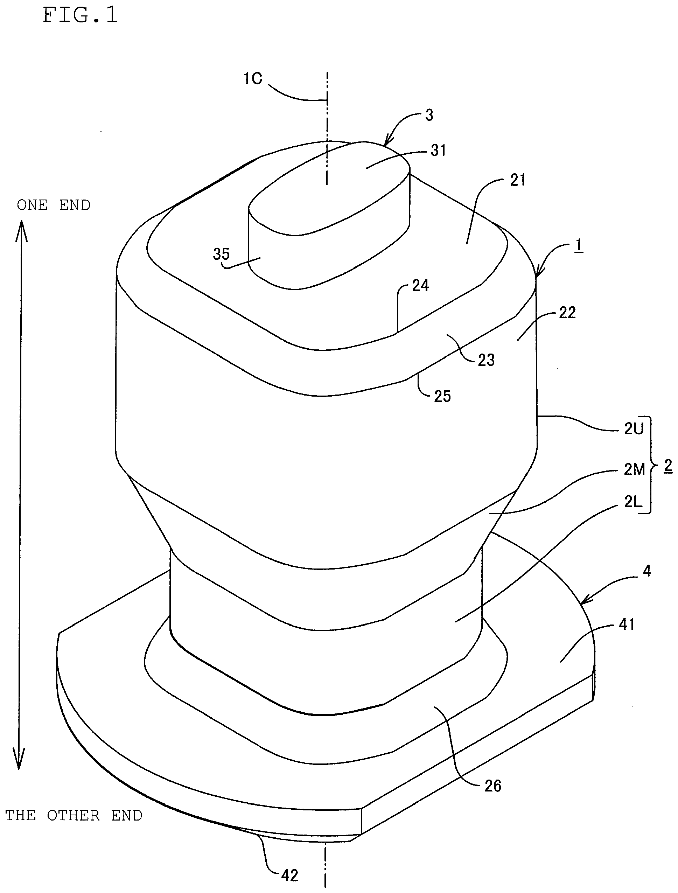

With reference to FIGS. 1 to 6, a description is given of a stud according to an embodiment to be fitted in a stud recess (hole) formed on the tread surface side of a tire and a tire with such studs fitted in the stud recesses formed on the tread surface side thereof.

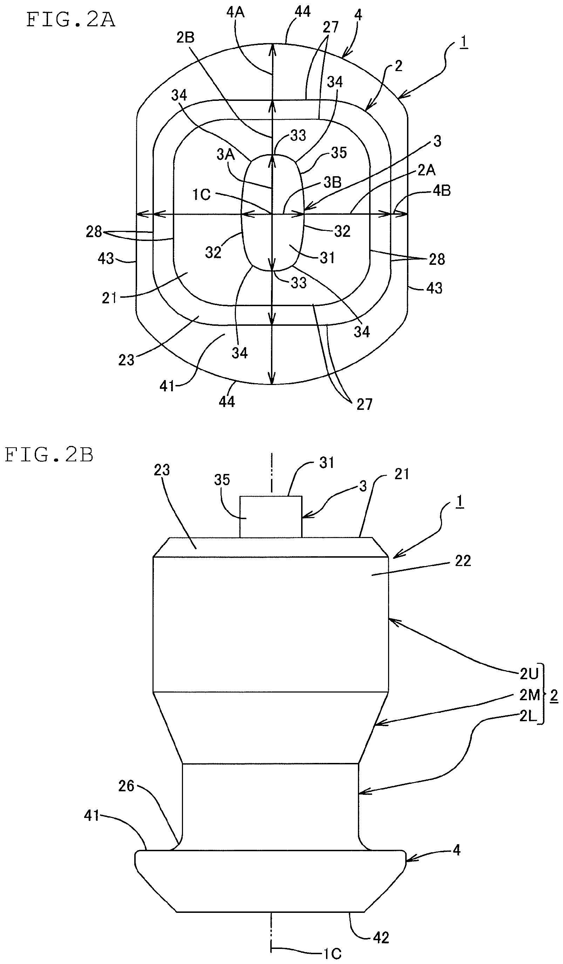

As shown in FIG. 1 and FIG. 2, a stud 1, constructed of a body section 2, a pin section 3 (sometimes called a tip) disposed on one end in the direction along the central axis of the body section 2, and a flange section 4 disposed on the other end in the direction along the central axis of the body section 2, is a columnar member extending in the direction along the central axis of the body section 2.

The stud according to this embodiment is of such construction that the central axis of the body section 2, the central axis of the pin section 3, and the central axis of the flange section 4 are all in alignment with each other. In the following description, the central axis of the stud 1, the central axis of the body section 2, the central axis of the pin section 3, and the central axis of the flange section 4 will all be referred to as the central axis 1C.

It is to be noted that the central axis 1C is the center line extending in the direction of extension of the stud 1 through the center of the cross section thereof orthogonal to the extension direction thereof which is the direction of the stud 1 embedded in the tire.

As shown in FIG. 1 and FIG. 2, the body section 2 has an upper part 2U positioned on one-end side (pin-section side) in the direction along the central axis 1C, a lower part 2L positioned on the other-end side (flange-section side) in the direction along the central axis 1C, a middle part 2M connecting the upper part 2U and the lower part 2L.

A border portion 23 between the one-end surface 21 in the direction along the central axis 1C of the upper part 2U and the peripheral surface 22 of the columnar body of the upper part 2U is formed in a flat surface connecting the peripheral edge 24 of the one-end surface 21 and the one-end side peripheral edge 25 of the peripheral surface 22, for instance.

That is, the upper part 2U is formed in a columnar body with an equal sectional shape orthogonal to the central axis 1C for the whole length along the central axis 1C except on the one-end surface 21 side thereof.

The lower part 2L has a border portion 26 between the other end thereof in the direction along the central axis 1C and the one-end surface 41 in the direction along the central axis 1C of the flange section 4, which is formed into an arcing surface curving relative to the central axis 1C, for instance.

That is, the lower part 2L is formed in a columnar body with an equal sectional shape orthogonal to the central axis 1C for the whole length along the central axis 1C except on the other-end side thereof.

The relationship between the sectional lengths of the upper part 2U and the sectional lengths of the lower part 2L is such that sectional lengths of the upper part 2U > sectional lengths of the lower part 2L.

The middle part 2M is formed into a tapered columnar body with the lengths of the sectional shape getting gradually shorter from the upper part 2U side to the lower part 2L side.

The body section 2 is so formed that the shape orthogonal to the central axis 1C thereof has a length direction (direction along the major axis) orthogonal to the central axis 1C thereof and a width direction (direction along the minor axis) orthogonal to the central axis 1C thereof.

That is, the upper part 2U of the body section 2 is so formed that the sectional shape orthogonal to the central axis 1C and the shape of the one-end surface 21 in the direction along the central axis 1C are rectangular with the corners thereof rounded into circular arcs as shown in FIG. 2A, for instance.

Similarly, the middle part 2M of the body section 2 is so formed that the sectional shape orthogonal to the central axis 1C is rectangular with the corners thereof rounded into circular arcs.

That is, the body section 2 is formed in a shape having the profile lines of the shape orthogonal to the central axis 1C with a pair of long sides 27, 27 symmetrical with respect to the major axis 2A of the rectangle as the line of symmetry and a pair of short sides 28, 28 symmetrical with respect to the minor axis 2B of the rectangle as the line of symmetry, as shown in FIG. 2A.

The pin section 3 is formed, for instance, in a columnar body with nearly equal sectional shape orthogonal to the central axis 1C for the whole length along the central axis 1C (More precisely, it is formed into a tapered columnar body with the axis lengths of the sectional shape getting gradually shorter from the one-end side (one-end surface 31 side) of the central axis 1C to the other-end side of the central axis.).

The pin section 3 is so formed that the shape thereof orthogonal to the central axis 1C has a length direction and a width direction thereof.

The pin section 3 comes with the sectional shape orthogonal to the central axis 1C and the shape of the one-end surface 31 in the direction along the central axis 1C having straight sides 33, 33 parallel with the minor axis 3B at the respective ends of the major axis 3A as shown in FIG. 2A, for instance. That is, the shape is a cross between an ellipse and a rectangle, which is so to speak a "rice bale" (oval) as viewed from the side.

In other words, the pin section 3 is formed into a shape having the profile lines of the shape orthogonal to the central axis 1C with a pair of long arcs 32, 32 symmetrical with respect to the major axis 3A as the line of symmetry, a pair of straight sides 33, 33 symmetrical with respect to the minor axis 3B as the line of symmetry, and short arcs 34, ... connecting the end of the long arc 32 and the straight side 33, as shown in FIG. 2A. It is to be noted that the arrangement is such that curvature of short arc 34 > curvature of long arc 32.

The area of the cross section orthogonal to the central axis 1C and the sectional area of the one-end surface 31 in the direction along the central axis 1C of the pin section 3 are both smaller than the area of the one-end surface 21 of the body section 2.

Also, the pair of long arcs 32, 32 forming borders between the one-end surface 31 and the peripheral surface 35 of the pin section 3, the pair of straight sides 33, 33, and the four short arcs 34, ... forming borders between the long arc 32 and the straight line 33 (see FIG. 2A) form the edges of the pin section 3.

The flange section 4 is formed, for instance, in a tapered columnar body with the axis lengths of the sectional shape orthogonal to the central axis 1C getting gradually shorter from the one-end side (body section 2 side) of the central axis 1C to the other-end side of the central axis 1C (see FIG. 2B).

The flange section 4 is so formed that the shape thereof orthogonal to the central axis 1C has a length direction and a width direction orthogonal to the central axis 1C thereof.

The flange section 4 comes with the sectional shape orthogonal to the central axis 1C and the shape of the one-end surface 41 and the other-end surface (bottom surface) 42 in the direction along the central axis 1C shaped like a track in an athletic field as shown in FIG. 2A.

That is, the flange section 4 is formed into a shape orthogonal to the central axis 1C having the contour line with a pair of straight lines 43, 43 symmetrical with respect to the major axis 4A as the line of symmetry and a pair of circular arcs 44, 44 symmetrical with respect to the minor axis 4B as the line of symmetry as shown in FIG. 2A.

The flange section 4 is so formed that the area of the one-end surface 41 positioned on one-end side in the direction along the central axis 1C and the sectional area thereof on the one-end surface 41 side (maximum sectional area orthogonal to the central axis 1C) are both larger than the maximum sectional area of the upper part 2U. Also, the area of the bottom surface, which is the other-end surface 42 in the direction along the central axis 1C, is about the same as the sectional area of the lower part 2L, for instance.

It is to be noted that the eccentricity of the maximum sectional shape of the flange section 4, which is defined by the length dimension of the major axis 4A and the length dimension of the minor axis 4B thereof, is preferably 0.1 or more and 0.25 or less.

$$\text{Note here that eccentricity} = 1 - (b/a)$$

a:    length dimension of the major axis 4A

b:    length dimension of the minor axis 4B

It is to be noted that the length direction (direction along the major axis) is the direction in which the major axes 2A, 3A, 4A pass through the central axis 1C in the shape described above and the width direction (direction along the minor axis) is the direction in which the minor axes 2B, 3B, 4B pass through the central axis 1C in the shape described above.

And as shown in FIG. 2A, the arrangement is such that the length direction (extension direction of the major axis 3A) of the pin section 3 and the length direction (extension direction of the major axis 4A) of the flange section 4 face in the same direction, and the length direction (extension direction of the major axes 3A and 4A) of the pin section 3 and the flange section 4 faces in a different direction from the length direction (extension direction of the major axis 2A) of the body section 2.

It is to be noted that the length direction of the pin section 3 facing in the same direction as the length direction of the flange section 4 in this invention means a complete agreement between the length direction of the pin section 3 and the length direction of the flange section 4 as shown in FIG. 2A. And additionally, it means that the intersecting angle between the length direction of the pin section 3 and the length direction of the flange section 4, that is, the intersecting angle between the major axis 3A of the pin section 3 in the sectional shape orthogonal to the central axis 1C and the major axis 4A of the flange section 4 in the sectional shape orthogonal to the central axis 1C, is 20° or smaller.

Also, the length direction of the pin section 3 and the flange section 4 facing in a different direction from the length direction of the body section 2 means an arrangement in which the intersecting angle between the length direction of the flange section 4 and the length direction of the body section 2 is 90°. And additionally, it means that the intersecting angle between the length direction of the flange section 4 and the length direction of the body section 2 is smaller than 90° and larger than 20°. The intersecting angle is preferably 70° or greater and more preferably 90° (orthogonal).

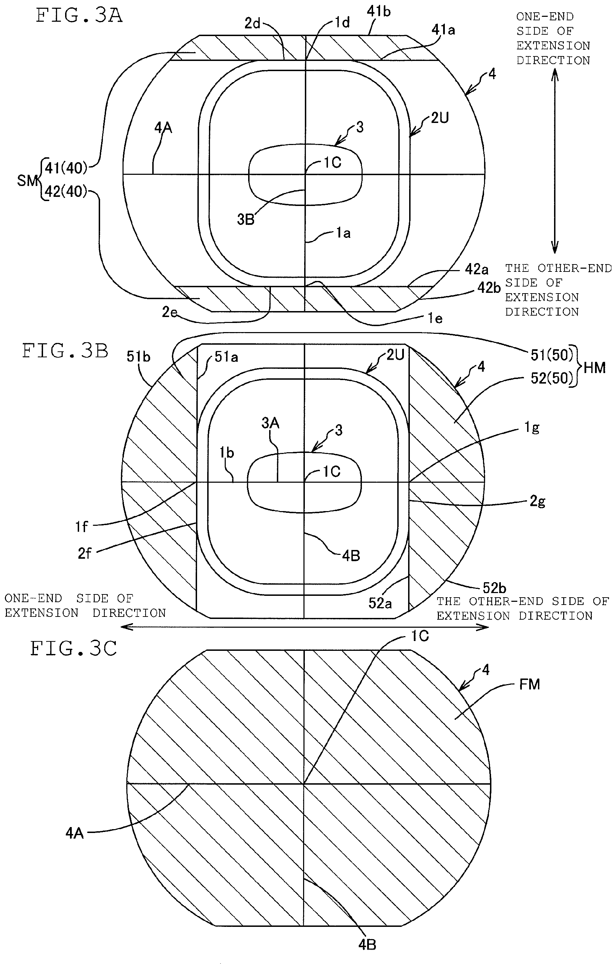

A stud according to this embodiment in orthographic projection as shown in FIGS. 3A and 3B, that is, the pin section 3, the body section 2, and the flange section 4 of the stud 1 as viewed from one-end side in the direction along the central axis of the stud 1 (from above the pin section 3 with the pin section 3 up and the flange section 4 down), satisfies $0 \leqq (SM/HM) < 1.0$ and $0 < (HM-SM)/FM < 0.7$ where SM is a projected area difference between the flange section 4 and the upper part 2U in the width direction of the pin section 3 (extension direction of the minor axis 3B of the pin section 3) as the first width direction of the stud 1, and HM is a projected area difference between the flange section 4 and the upper part 2U in the length direction of the pin section 3 (extension direction of the major axis 3A of the pin section 3) as the second width direction of the stud 1, which is orthogonal to the width direction of the pin section 3.

As shown in FIG. 3A, the projected area difference SM is projected area portions 40, 40 (hatched portions in FIG. 3A) of the flange section 4 positioned between the maximum length position of the upper part 2U with which the straight line 1a (i.e., straight line 1a orthogonal to the major axis 3A of the flange section 4) extending in the width direction of the pin section 3 (first width direction) intersects and the maximum length position of the flange section 4 with which the straight line 1a intersects, on both sides of the extension direction of the straight line 1a. In other words, the projected area difference SM is projected area portions 40, 40 of the flange section 4 which are not overlapped with the projected area portions of the upper part 2U.

More specifically, as shown in FIG. 3A, the projected area difference SM is a total projected area portion 40, 40 of the flange section 4 adding up the one-end side area portion 40A enclosed by the profile line 41b of the flange section 4 and the one-end side defining line 41a parallel with the major axis 4A of the flange section 4 (second width direction (length direction of the pin section 3)), which passes through the point of intersection 1d of the maximum length position of the upper part 2U with the straight line 1a in extension of the width direction of the pin section 3 (first width direction)on the one-end side of the extension direction of the straight line 1a, and the other-end side area portion 40B enclosed by the profile line 42b of the flange section 4 and the other-end side defining line 42a parallel with the major axis 4A of the flange section 4, which passes through the point of intersection 1e of the profile line 2e of the upper part 2U with the straight line 1a on the other-end side of the extension direction of the straight line 1a.

As shown in FIG. 3B, the projected area difference HM is projected area portions 50, 50 (hatched portions in FIG. 3B) of the flange section 4 positioned between the maximum width position of the upper part 2U with which the straight line 1b (i.e., straight line 1b orthogonal to the minor axis 4B of the flange section 4) extending in the length direction of the pin section 3 (second width direction) intersects and the maximum width position of the flange section 4 with which the straight line 1b intersects on both sides of the extension direction of the straight line 1b. In other words, the projected area difference HM is projected area portions 50, 50 of the flange section 4 which are not overlapped with the projected area portions of the upper part 2U.

More specifically, as shown in FIG. 3B, the projected area difference HM is a total projected area portion 50, 50 of the flange section 4 adding up the one-end side area portion 50A enclosed by the profile line 51b of the flange section 4 and the one-end side defining line 51a parallel with the minor axis 4B of the flange section 4 (second width direction (width direction of the pin section 3)), which passes through the point of intersection 1f of the profile line 2f of the upper part 2U with the straight line 1b in extension of the length direction of the pin section 3 (second width direction) on the one-end side of the extension direction of the straight line 1b, and the other-end side area portion 50B enclosed by the profile line 52b of the flange section 4 and the other-end side defining line 52a parallel with the minor axis 4B of the flange section 4, which passes through the point of intersection 1g of the profile line 2g of the upper part 2U with the straight line 1b on the other-end side of the extension direction of the straight line 1b.

Further, as shown in FIG. 3C, the stud 1 according to this embodiment is so constructed as to satisfy 0 < (HM-SM)/FM < 0.7 where FM is a maximum sectional area of the flange section 4 orthogonal to the central axis 1C of the stud 1.

That is, the stud 1 according to this embodiment is so constructed as to satisfy both 0 $\leqq$ (SM/HM) < 1.0 and 0 < (HM-SM) /FM < 0.7.

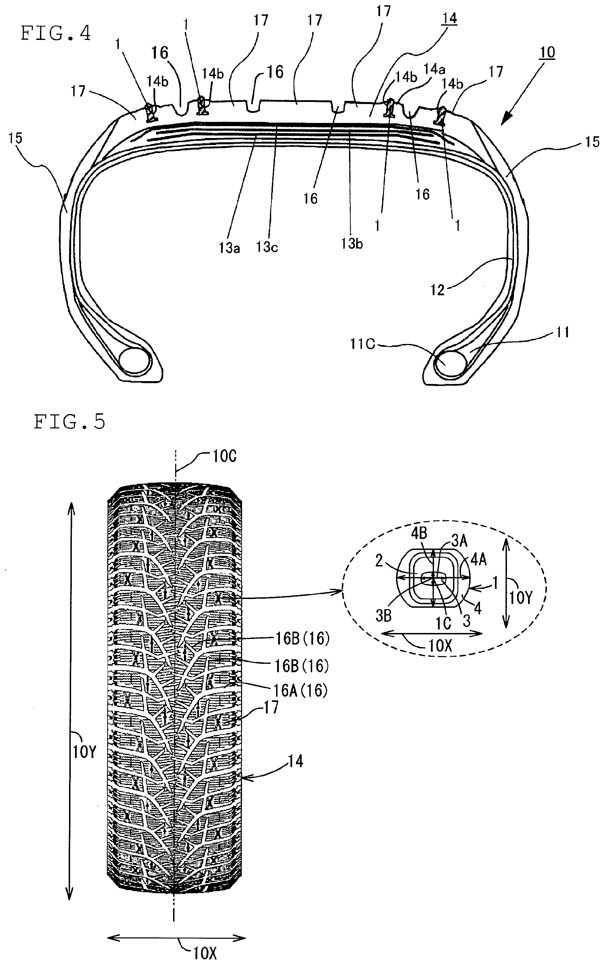

Next, with reference to FIG. 4, a description is give of a tire 10, which is called a studdable tire or a studded tire, with studs 1 embedded in stud recesses 14b formed in the tread 14.

The tire 10 includes bead regions 11, bead cores 11C, a carcass layer 12, belt layers 13a, 13b, a belt protection layer 13c, sidewalls 15, and studs 1.

The carcass layer 12 is a skeletal member of the tire 10 provided toroidally astride a pair of bead cores 11C disposed within the bead regions 11. Disposed on the radially outside of the crown region of the carcass layer 12 are an inner belt layer 13a and an outer belt layer 13b, for instance. The belt layers 13a, 13b are each made of steel cords or cords of stranded organic fibers crossing each other at an angle of 20 to 70 degrees with respect to the equatorial line 10C of the tire (see FIG. 5).

The tread 14 is a rubber member (tread rubber) disposed radially outside of the belt layer 13b. Formed on the surface 14a of the tread 14 are a plurality of grooves 16. And land portions (blocks) 17 are defined by these plurality of grooves 16. As shown in FIG. 5, for instance, the grooves 16 consist of a plurality of main grooves (trunk grooves) 16A formed to extend from the shoulder side of the tire toward the equatorial line 10C of the tire and auxiliary grooves (branch grooves) 16B formed to extend from the main grooves 16A.

The sidewalls 15 are each a rubber member covering the carcass layer 12 by extending in the tire side region from the end of the tread 14.

Disposed between the tread 14 and the outer belt layer 13b is the belt protection layer 13c. The belt protection layer 13c is constructed of cords of organic fibers or the like.

Formed in the land portions 17 on the surface 14a side of the tread 14 are stud recesses 14b, and studs 1 are embedded in the stud recesses 14b.

As shown in FIG. 4, the stud recess 14b is formed in a cylindrical bottomed hole, for instance, extending from the surface 14a of the tread 14 of the tire toward the center of the tire circle.

The stud recess 14b has an entry portion, a bottom portion, and a middle portion connecting the entry portion with the bottom portion, for instance.

The entry portion, the bottom portion, and the middle portion are formed concentrically around the central axis of the stud recess 14b.

The middle portion is a cylindrical hole with a fixed diameter, for instance.

The entry portion is a funnel-shaped hole portion surrounded by a tapered surface (conical surface having the center line of the hole of the stud recess 14b as the center line) whose diameter increases from the entry-side end of the middle portion toward the surface 14a of the tread 14.

The bottom portion is a bottomed hole portion surrounded by a surface whose diameter first increases from the bottom-side end of the circular-shaped middle portion toward the center of the tire circle and then decreases toward the bottom.

It is to be noted, however, that the bottom-side shape of the bottom portion is preferably of a shape fitting the shape of the flange section 4 of the stud 1 in order to improve the anti-stud-loss performance.

The studs 1 are embedded in the stud recesses 14b as they are driven with the flange section 4 side thereof first into the stud recesses 14b by a not-shown stud-driving machine.

The height dimension of the stud 1 is designed to be greater than the depth dimension of the stud recess 14b. And the stud is installed such that the pin section 3 protrudes above the surface 14a of the tread 14.

And in an embodiment of the invention, a tire 10 having studs 1 fitted in stud recesses 14b formed on the surface 14a side of the tread 14 is so arranged that the width direction of the pin section 3, as the first width direction of the studs 1, faces in the same direction as the circumferential direction 10Y of the tire and the length direction of the pin section 3, as the second width direction of the studs 1, faces in the same direction as the axial direction 10X of the tire (see FIG. 5).

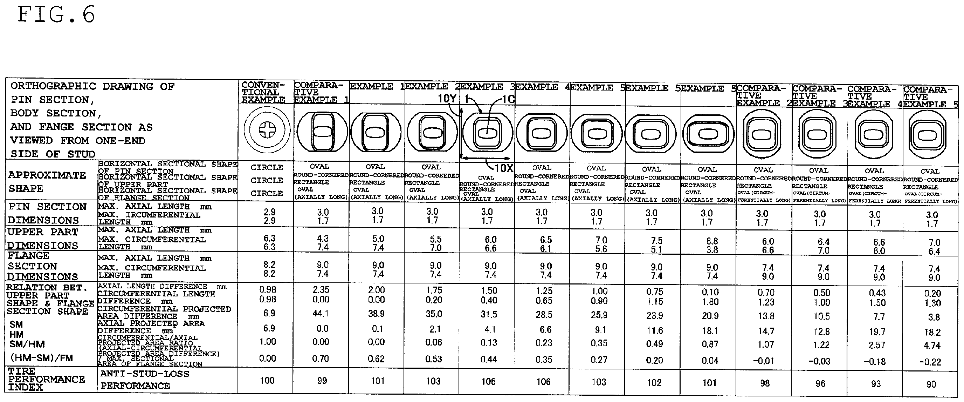

That is, as shown in FIG. 5 and FIG. 6, the tire 10 having studs 1 fitted according to this embodiment is so arranged that the pin section, the body section, and the flange section in orthographic projection, which is the pin section, the body section, and the flange section as seen from one-end side in the direction along the central axis 1C of the stud 1, satisfy $0 \leqq (SM/HM) < 1.0$ and $0 < (HM-SM)/FM < 0.7$ where SM is a projected area difference between the flange section 4 and the upper part 2U in the circumferential direction of the tire, HM is a projected area difference between the flange section 4 and the upper part 2U in the axial direction of the tire, and FM is a maximum sectional area of the flange section 4 orthogonal to the central axis 1C of the stud 1.

Examples

As shown in FIG. 6, studs 1 having different shapes were prepared, and a plurality of tires 10 fitted with these studs 1 were manufactured. And these tires 10 were subjected to the testing of anti-stud-loss performance.

It is to be noted that with the Examples and Comparative Examples shown in FIG. 6, the tires 10 were fabricated with the studs 1 fitted in the stud recesses 14b such that the length direction of the pin section 3 of the studs 1 faces in the same direction as the axial direction 10X of the tire and the width direction of the pin section 3 of the studs 1 faces in the same direction as the circumferential direction 10Y of the tire. And these tires 10 were subjected to the testing of anti-stud-loss performance.

That is, the testing was conducted to determine how the different values of SM (projected area difference in the tire circumferential direction) / HM (projected area difference in the tire axial direction) and (HM-SM) / FM of the studs 1 affect the anti-stud-loss performance of these tires 10.

The testing conditions were as follows:

- Tire size: 205/55R16
- Internal pressure: 230 KPa
- Anti-stud-loss performance:

The vehicles fitted with new tires were operated a total of about 30,000 km on general icy, snowy, and dry roads, and the numbers of studs lost during the run were counted. The anti-stud-loss performance of the studded tires was evaluated by calculating the ratio (B/A) between the number of lost studs (A) and the initial number of studs (B).

FIG. 6 shows the anti-stud-loss performance based on the test results of the tires 10 of Conventional Example, Comparative Examples 1 to 5, and Examples 1 to 6.

It is to be noted that the anti-stud-loss performance as shown in FIG. 6 are the indices for comparative assessment calculated for the tires of Comparative Examples 1 to 5 and Examples 1 to 6 relative to the performance evaluation result of the tire of Conventional Example as 100. The greater the indices becomes, the higher the anti-stud-loss performance becomes.

From the test results, it is ascertained that with the tires 10 of Comparative Examples 2 to 5 which have the projected area ratio (= SM/HM) being larger than 1 and the evaluation value (= (HM-SM) /FM) being smaller than 0, the anti-stud-loss performance drops below that of Conventional Example.

That is, SM/HM being larger than 1 represents cases where SM is larger than HM. This is the cases where the sectional area of the flange section 4 is significantly larger than the sectional area of the upper part 2U in the tire circumferential direction 10Y. In such cases, the tire-circumferential components of the contact area between the stud 1 and the tire rubber are relatively smaller than the tire-axial components thereof. As a result, it is assumed, the stud 1 can more easily fall over in the tire circumferential direction, thus causing a drop in the anti-stud-loss performance.

Also, (HM-SM)/FM being smaller than 0 represents cases where SM is larger than HM. In these cases, too, it is assumed that a drop in anti-stud-loss performance is caused as described above.

Also, from the test results, it is found that even when SM/HM is 0, Comparative Example 1 with (HM-SM)/FM being 0.7 shows a slightly lower anti-stud-loss performance than Conventional Example.

That is, SM/HM being 0.7 or larger as with Comparative Example 1 represents cases where the sectional area of the flange section 4 is exceedingly larger than the sectional area of the upper part 2U in the tire axial direction. In such cases, the cross section of the upper part 2U is in a shape elongated in the tire circumferential direction (of very narrow width in the tire axial direction) . As a result, it is assumed that even against slight inputs in the lateral direction of the tire (tire axial direction), the stud 1 can easily fall over in the tire axial direction, thus causing a drop in anti-stud-loss performance.

Moreover, with Comparative Example 1 which has a short axial length of the upper part 2U, it is inevitable that the axial length of the pin section 3 is shortened, which causes a drop in braking performance.

On the other hand, from the test results, it is ascertained that Examples 1 to 6, which are so constructed as to satisfy 0 ≦ (SM/HM) < 1.0 and 0 < (HM-SM)/FM < 0.7, all show improved anti-stud-loss performance over that of Conventional Example.

Also, from the test results, it is ascertained that Examples 3 and 4, which are so constructed as to satisfy 0 ≦ (SM/HM) < 0.4 and 0.2 < (HM-SM)/FM < 0.5, show an anti-stud-loss performance evaluation index of "106", further improving the anti-stud-loss performance over Conventional Example.

That is, if the anti-stud-loss performance is to be improved, it is preferable that the length of the flange section 4 in the tire axial direction 10X is long. This is because when the length of the flange section 4 in the tire axial direction 10X is long, there is increased area of contact between the flange section 4 and the tire rubber at the braking or acceleration of the tire 10. As a result, there will be greater "contact area × contact pressure", which makes it more difficult for studs 1 to fall out.

Also, in order to improve the anti-stud-loss performance, it is preferable that the width difference between the upper part 2U and the flange section 4 in the tire circumferential direction 10Y is small. This is because if the width difference between the flange section 4 and the upper part 2U in the tire circumferential direction 10Y is large, there will be smaller contact area between the upper part 2U and the tire rubber. At the same time, there will be greater gap between the upper part 2U and the wall surface of the stud recess 14b. This will make the contact area between the lower part 2L and the wall surface of the stud recess 14b smaller, which makes it easier for studs 1 to fall out.

On the other hand, in observing the weight regulation of studs, it is difficult to employ a construction in which the width difference between the upper part 2U and the flange section 4 all along the circumference thereof is small.

In view of the above-described circumstances, the present embodiments employ the arrangements that satisfy ≦ (SM/HM) < 1.0 and 0 < (HM-SM) /FM < 0.7. Thus, the weight regulation of the studs is observed. And the stud 1 and the tire 10 which satisfy the conditions that the length of the flange section 4 in the tire axial direction 10X is long and the width difference between the upper part 2U and the flange section 4 in the tire circumferential direction 10Y is small are obtained.

That is, according to the preferred embodiments, the total weight of the studs used on a tire can be kept or reduced, thus observing the stud weight regulation. And the stud 1 and the tire 10 fitted with the studs 1 featuring improved anti-stud-loss performance can be obtained.

Also, the stud 1 according to an embodiment is such that the length direction of the upper part 2U and the length direction of the flange section 4 face in different directions from each other. As a result, compared with the studs having the length direction of the upper part 2U and the length direction of the flange section 4 facing in the same direction, this stud 1 displays an improved anti-stud-loss performance because the sectional area of the upper part 2U is small and the width difference between the upper part 2U and the flange section 4 in the tire circumferential direction 10Y is small.

Also, the ellipticity of the maximum sectional shape of the flange section 4 is 0.1 or more and 0.25 or less, and the tire axial component of the flange section 4 is greater than the tire circumferential component thereof. Consequently, as described already, there will be increased area of contact between the flange section 4 and the tire rubber at the braking or acceleration of the tire 10. As a result, there will be greater "contact area × contact pressure", which makes it more difficult for studs 1 to fall out, thus improving the anti-stud-loss performance.

It should be appreciated that the body section 2, the pin section 3, and the flange section 4 may be of any shape as long as they are of shapes having a length direction and a width direction orthogonal to the central axis 1C. For example, the shapes having a length direction and a width direction orthogonal to the central axis 1C may be triangular or polygonal.

Also, when the pin section 3 of the stud 1 in orthographic projection is shaped as a perfect circle, regular triangle, square, regular polygon, or such other shape having no clear distinction between the length direction and the width direction, the stud 1 may be so constructed as to satisfy 0 ≦ (SM/HM) < 1.0 and 0 < (HM-SM)/FM < 0.7, in which any optional width direction of the pin section 3 in orthographic projection is defined as the first width direction of the stud 1 and the direction intersecting (e.g., orthogonal to) the first width direction of the stud 1 as the second width direction of the stud 1.

Also, disclosed in an embodiment is a tire 10 fitted with studs 1 for which the central axis of the body section 2, the central axis of the pin section 3, and the central axis of the flange section 4 are in alignment with each other. However, the tire may be fitted with studs 1 for which the central axis of the body section 2, the central axis of the pin section 3, and the central axis of the flange section 4 are not in alignment with each other.

A stud according to a preferred embodiment is a stud to be fitted in a stud recess formed on the tread surface side of a tire. The stud has a body section in a columnar shape, a pin section disposed on one end of the body section, and a flange section disposed on the other end of the body section. And the pin section is formed in a shape having a length direction and a width direction. And the pin section, the body section, and the flange section in orthographic projection, that is, the pin section, the body section, and the flange section of the stud as viewed from one-end side in the direction along the central axis of the stud, satisfy $0 \leq (SM/HM) < 1.0$ and $0 < (HM-SM)/FM < 0.7$ where SM is a projected area difference between the flange section and the body section in the width direction of the pin section of the stud, HM is a projected area difference between the flange section and the body section in the length direction of the pin section of the stud, which is orthogonal to the width direction of the pin section, and FM is a maximum sectional area of the flange section orthogonal to the central axis of the stud. In it, the projected area difference SM is a total projected area portion of the flange section adding up the one-end side area portion enclosed by the profile line of the flange section and the one-end side defining line parallel with the length direction of the pin section, which passes through the point of intersection of the maximum length position of the body section with the straight line in extension of the width direction of the pin section on the one-end side of the extension direction of the width direction of the pin section, and the other-end side area portion enclosed by the profile line of the flange section and the other-end side defining line parallel with the length direction of the pin section, which passes through the point of intersection of the maximum length position of the body section with the straight line in extension of the width direction of the pin section on the other-end side of the extension direction of the width direction of the pin section. And the projected area difference HM is a total projected area portion of the flange section adding up the one-end side area portion enclosed by the profile line of the flange section and the one-end side defining line parallel with the width direction of the pin section, which passes through the point of intersection of the maximum width position of the body section with the straight line in extension of the length direction of the pin section on the one-end side of the extension direction of the length direction of the pin section and the other-end side area portion enclosed by the profile line of the flange section and the other-end side defining line parallel with the width direction of the pin section, which passes through the point of intersection of the maximum width position of the body section with the straight line in extension of the length direction of the pin section on the other-end side of the extension direction of the length direction of the pin section. As a result, a stud provided is one capable not only of keeping or reducing the total weight of the studs used on a tire, thus observing the stud weight regulation, but also of improving the anti-stud-loss performance.

Also, the stud may be so constructed that the body section and the flange section are respectively formed in shapes having a length direction and a width direction orthogonal to the central axis of the stud, and the length direction of the body section and the length direction of the flange section face in different directions from each other. Arranged in this manner, compared with the studs having the length direction of the body section and the length direction of the flange section facing in the same direction, this stud can display an improved anti-stud-loss performance because the sectional area of the body section is small and the width difference between the body section and the flange section in the tire circumferential direction is small.

A tire according to another preferred embodiment has the above-described studs fitted in stud recesses formed on the tread surface side thereof. And the width direction of the pin section of the studs faces in the same direction as the circumferential direction of the tire, and the length direction of the pin section of the studs faces in the same direction as the axial direction of the tire. Thus, the tire provided features an improved anti-stud-loss performance.

Description of Reference Numerals

1 stud
1a, 1b straight line
1d, 1e, 1f, 1g point of intersection
1C central axis of stud
2 body section
2d,2e/2f,2g maximum length position of upper part (body section)
3 pin section
4 flange section
10 tire

10X tire axial direction
14 tread
14a tread surface
14b stud recess
40,40,50,50 projected area portion of flange section
40A,50A one-end side area portion
41a,51a one-end side defining line
41b,42b,51b,52b profile line of flange section
42a,52b the other-end side defining line
40B,50B the other-end side area portion


**Claims**

1. A stud (10) to be fitted in a stud recess (14b) formed on a tread surface side of a tire, the stud (10) comprising:

   a columnar body section (2);
   a pin section (3) disposed on one end in the direction along the central axis of the body section (2); and
   a flange section (4) disposed on the other end of the body section (2),
   wherein the pin section (3) is formed in a shape having a longer direction and a short direction, **characterised in that**
   wherein the pin section (3), the body section (2), and the flange section (4) in orthographic projection satisfy $0 \leqq (SM/HM) < 1.0$ and $0 < (HM-SM)/FM < 0.7$ where SM is a projected area difference between the flange section (4) and the body section (2) in the short direction (3B) of the pin section (3) of the stud (10), HM is a projected area difference between the flange section (4) and the body section (2) in the longer direction (3A) of the pin section (3) of the stud (10), which is orthogonal to the short direction (3B) of the pin section (3), and FM is a maximum sectional area of the flange section (4) orthogonal to the central axis of the stud (10),
   the projected area difference SM being a total projected area portion (40) of the flange section (4) adding up the one-end side area portion (40A) enclosed by the profile line (41b) of the flange section (4) and the one-end side defining line (41a) parallel with the longer direction (3A) of the pin section (3), which passes through the point of intersection (1d) of a maximum length position of the body section (2) with the straight line (1a) in extension of the short direction (3B) of the pin section (3) on the one-end side of the extension direction thereof, and the other-end side area portion (40B) enclosed by the profile line (42b) of the flange section (4) and the other-end side defining line (42ab) parallel with the longer direction (3A) of the pin section (3), which passes through the point of intersection (1e) of the maximum length position of the body section (2) with the straight line (1a) in extension of the short direction (3B) of the pin section (3) on the other-end side of the extension direction thereof, and
   the projected area difference HM being a total projected area portion (50) of the flange section (4) adding up the one-end side area portion (50A) enclosed by the profile line (51b) of the flange section (4) and the one-end side defining line (51a) parallel with the short direction (3B) of the pin section (3), which passes through the point of intersection (1f) of the maximum width position of the body section (2) with the straight line (1b) in extension of the longer direction (3A) of the pin section (3) on the one-end side of the extension direction thereof and the other-end side area portion (50B) enclosed by the profile line (52b) of the flange section (4) and the other-end side defining line (52a) parallel with the short direction (3B) of the pin section (3), which passes through the point of intersection (1g) of the maximum width position of the body section (2) with the straight line (1b) in extension of the longer direction (3A) of the pin section (3) on the other-end side of the extension direction thereof, and
   wherein the eccentricity of the maximum sectional shape of the flange section (4), which is defined by the length dimension a of the longer direction (4A) and the length dimension b of the short direction (4B) thereof, is 0.1 or more and 0.25 or less,
   wherein eccentricity = 1 - (b/a).

2. The stud (10) of claim 1, wherein the body section (2) and the flange section (4) are respectively formed in a shape having a longer direction (2A, 4A) and a short direction (2B, 4B) orthogonal to the central axis (1C) of the stud (10), and wherein the longer direction (2A) of the body section (2) and the longer direction (4A) of the flange section (4) face in different directions from each other.

3. A tire having studs (10) as recited in claim 1 or 2 fitted in stud recesses (14b) formed on a tread surface side thereof, wherein the short direction (3B) of the pin section (3) of the studs (10) faces in the same direction as the circumferential direction (10Y) of the tire and the length (3A) direction of the pin section (3) of the studs (10) faces in the same direction as the axial direction (10X) of the tire.

**Patentansprüche**

1. Spike (10), der in einer Spikeaussparung (14b) angebracht werden soll, die auf einer Laufflächenseite eines Reifens geformt ist, wobei der Spike (10) Folgendes umfasst:

   eine säulenförmige Körpersektion (2),
   eine Stiftsektion (3), die an dem einen Ende in der Richtung entlang der Mittelachse der Körpersektion (2) angeordnet ist,
   und
   eine Flanschsektion (4), die an dem anderen Ende der Körpersektion (2) angeordnet ist,
   wobei die Stiftsektion (3) in einer Gestalt geformt ist, die eine längere Richtung und eine kurze Richtung aufweist,
   **dadurch gekennzeichnet, dass**
   wobei die Stiftsektion (3), die Körpersektion (2) und die Flanschsektion (4) in orthographischer Projektion 0 ≤ (SM/SH) < 1,0 und 0 < (HM-SM)/FM 0,7 erfüllen, wobei SM eine Projektionsflächendifferenz zwischen der Flanschsektion (4) und der Körpersektion (2) in der kurzen Richtung (3B) der Stiftsektion (3) des Spikes (10) ist, HM eine Projektionsflächendifferenz zwischen der Flanschsektion (4) und der Körpersektion (2) in der längeren Richtung (3A) der Stiftsektion (3) des Spikes (10) ist, die senkrecht zu der der kurzen Richtung (3B) der Stiftsektion (3) ist, und FM eine maximale Schnittfläche der Flanschsektion (4), senkrecht zu der Mittelachse des Spikes (10), ist,
   die Projektionsflächendifferenz SM ein gesamter Projektionsflächenabschnitt (40) der Flanschsektion (4) ist, der den einen endseitigen Flächenabschnitt (40A), der von der Profillinie (41b) der Flanschsektion (4) und der einen endseitigen Definitionslinie (41a), parallel zu der längeren Richtung (3A) der Stiftsektion (3), die durch den Schnittpunkt (1d) einer Position maximaler Länge der Körpersektion (2) mit der Geraden (1a) in Verlängerung der kurzen Richtung (3B) der Stiftsektion (3) auf der einen Endseite der Ausdehnungsrichtung derselben hindurchgeht, eingeschlossen wird, und den anderen endseitigen Flächenabschnitt (40B), der von der Profillinie (42b) der Flanschsektion (4) und der anderen endseitigen Definitionslinie (42b), parallel zu der längeren Richtung (3A) der Stiftsektion (3), die durch den Schnittpunkt (le) der Position maximaler Länge der Körpersektion (2) mit der Geraden (1a) in Verlängerung der kurzen Richtung (3B) der Stiftsektion (3) auf der anderen Endseite der Ausdehnungsrichtung derselben hindurchgeht, eingeschlossen wird, addiert, und
   die Projektionsflächendifferenz HM ein gesamter Projektionsflächenabschnitt (50) der Flanschsektion (4) ist, der den einen endseitigen Flächenabschnitt (50A), der von der Profillinie (51b) der Flanschsektion (4) und der einen endseitigen Definitionslinie (51a), parallel zu der kurzen Richtung (3B) der Stiftsektion (3), die durch den Schnittpunkt (1f) der Position maximaler Länge der Körpersektion (2) mit der Geraden (1b) in Verlängerung der längeren Richtung (3A) der Stiftsektion (3) auf der einen Endseite der Ausdehnungsrichtung derselben hindurchgeht, eingeschlossen wird, und den anderen endseitigen Flächenabschnitt (50B), der von der Profillinie (52b) der Flanschsektion (4) und der anderen endseitigen Definitionslinie (52b), parallel zu der kurzen Richtung (3B) der Stiftsektion (3), die durch den Schnittpunkt (1g) der Position maximaler Länge der Körpersektion (2) mit der Geraden (1b) in Verlängerung der längeren Richtung (3A) der Stiftsektion (3) auf der anderen Endseite der Ausdehnungsrichtung derselben hindurchgeht, eingeschlossen wird, addiert, und
   wobei die Exzentrizität der maximalen Schnittform der Flanschsektion (4), die durch die Längenabmessung a der längeren Richtung (4A) und die Längenabmessung b der kurzen Richtung (4B) derselben definiert wird, 0,1 oder mehr und 0,25 oder weniger beträgt,
   wobei die Exzentrizität = 1 - (b/a).

2. Spike (10) nach Anspruch 1, wobei die Körpersektion (2) und die Flanschsektion (4) jeweils in einer Gestalt geformt sind die eine länger Richtung (2A, 4A) und eine kurze Richtung (2B, 4B), senkrecht zu der Mittellachse (1C) des Spikes (10), aufweist, und wobei die längere Richtung (2A) der Körpersektion (2) und die längere Richtung (4A) der Flanschsektion (4) in voneinander unterschiedliche Richtungen zeigen.

3. Reifen, der Spikes (10) nach Anspruch 1 oder 2 aufweist, die in Spikeaussparungen (14b) angebracht sind, die auf einer Laufflächenseite desselben geformt sind, wobei die kurze Richtung (3B) der Stiftsektion (3) der Spikes (10) in die gleiche Richtung zeigt wie die Umfangsrichtung (10Y) des Reifens und die längere Richtung (3A) der Stiftsektion (3) der Spikes (10) in die gleiche Richtung zeigt wie die Axialrichtung (10X) des Reifens.

**Revendications**

1. Goujon (10), destiné à être fixé dans un évidement de goujon (14b) formé sur un côté de surface de bande de roulement d'un bandage pneumatique, le goujon comprenant :

    une section de corps en colonne (2) ;
    une section de goupille (1) disposée sur une extrémité, dans la direction allant le long de l'axe central, de la section de corps (2) ; et
    une section de bride (4) disposée sur l'autre extrémité de la section de corps (2) ;
    dans lequel la section de goupille (3) est formée en une forme ayant une direction plus longue et une direction courte, **caractérisé en ce que** :

    la section de goupille (3), la section de corps (2) et la section de bride (4), satisfont, dans une projection orthographique, la relation de $0 \le (SM/HM) < 1,0$ et de $0 < (HM/SM)/FM < 0,7$, SM étant une différence de surface projetée entre la section de bride (4) et la section de corps (2) dans la direction courte (3B) de la section de goupille (3) du goujon (10), HM étant une différence de surface projetée entre la section de bride (4) et la section de corps (2) dans la direction plus longue (3A) de la section de goupille (3) du goujon (10), orthogonale à la direction courte (3B) de la section de goupille (3), et FM étant une surface de section maximale de la section de bride (4) orthogonale à l'axe central du goujon (10) ;
    la différence de surface projetée SM étant une partie de surface projetée totale (40) de la section de bride (4), qui additionne la partie de surface du côté d'une extrémité (40A) renfermée par la ligne de profil (41b) de la section de bride (4) de goupille (3), passant à travers le point d'intersection (1d) d'une position à longueur maximale de la section de corps (2) et la ligne droite (1a), en extension de la direction courte (3B) de la section de goupille (3) sur le côté d'une extrémité de sa direction d'extension, et de l'autre partie de surface sur le côté d'une extrémité (40B) renfermée par la ligne de profil (42b) de la section de bride (4) et le côté de l'autre extrémité définissant une ligne (42b) parallèle à la direction plus longue (3A) de la section de goupille (3), passant à travers le point d'intersection (le) de la position à longueur maximale de la section de corps (2) et de la ligne droite (1a) en extension de la direction courte (3B) de la section de goupille (3) sur le côté de l'autre extrémité de sa direction d'extension ; et
    la différence de surface projetée HM étant une partie de surface projetée totale (50) de la section de bride (4), qui additionne la partie de surface du côté d'une extrémité (50A) renfermée par la ligne de profil (51b) de la section de bride (4) sur le côté d'une extrémité définissant la ligne (51a) parallèle à la direction courte (3B) de la section de goupille (3), passant à travers le point d'intersection (1f) de la position à largeur maximale de la section de corps (2) et de la ligne droite (1b), en extension de la direction plus longue (3A) de la section de goupille (3) sur le côté d'une extrémité de sa direction d'extension, et de la partie de surface du côté de l'autre extrémité (50B) renfermée par la ligne de profil (52b) de la section de bride (4) et le côté de l'autre extrémité définissant une ligne (52a) parallèle à la direction courte (3B) de la section de goupille (3), passant à travers le point d'intersection (1g) de la position à largeur maximale de la section de corps (2) et de la ligne droite (1b), en extension de la direction plus longue (3A) de la section de goupille (3) sur le côté de l'autre extrémité de sa direction d'extension ; et
    dans lequel l'excentricité de la forme de section maximale de la section de bride (4), définie par la dimension de longueur a de la direction plus longue (4A) et la dimension de longueur b de la direction courte (4B) est de 0,1 ou plus et de 0,25 ou moins ;
    dans lequel l'excentricité $= 1 - (b/a)$.

2. Goujon (10) selon la revendication 1, dans lequel la section de corps (2) et la section de bride (4) sont respectivement formées en une forme ayant une direction plus longue (2A, 4A) et une direction courte (2B, 4B) orthogonale à l'axe central (1C) du goujon (10), et dans lequel la direction plus longue (2A) de la section de corps (2) et la direction plus longue (4A) de la section de bride (4) sont orientées dans des directions différentes l'une par rapport à l'autre.

3. Bandage pneumatique comportant des goujons (10) selon les revendications 1 ou 2, ajustés dans des évidements de goujon (14b) formés sur un côté de sa surface de bande de roulement, dans lequel la direction courte (3B) de la section de goupille (3) des goujons (10) est orientée dans la même direction que la direction circonférentielle (10Y) du bandage pneumatique, la direction de longueur (3A) de la section de goupille (3) des goujons (10) étant orientée dans la même direction que la direction axiale (10X) du bandage pneumatique.

FIG.1

ONE END

THE OTHER END

FIG.2A

FIG.2B

FIG.3A

2d  1d  41b  41a

ONE-END
SIDE OF
EXTENSION
DIRECTION

4

4A  3  2U

SM { 41(40)  42(40)

1C

3B  1a

42a  THE OTHER-END
42b  SIDE OF
EXTENSION
DIRECTION

2e  1e

FIG.3B

51b  51a  2U  4  51(50)  52(50) } HM

3A  1g

1b  3

1C  2g

1f
2f

4B

52b

ONE-END SIDE OF
EXTENSION DIRECTION

52a  THE OTHER-END SIDE OF
EXTENSION DIRECTION

1C

FIG.3C

1C

4  FM

4A

4B

15

FIG.4

FIG.5

# FIG.6

| ORTHOGRAPHIC DRAWING OF PIN SECTION, BODY SECTION, AND FANGE SECTION AS VIEWED FROM ONE-END SIDE OF STUD | | CONVENTIONAL EXAMPLE | COMPARATIVE EXAMPLE 1 | EXAMPLE 1 | EXAMPLE 2 (10Y) | EXAMPLE 3 (1C / 10X) | EXAMPLE 4 | EXAMPLE 5 | EXAMPLE 5 | EXAMPLE 5 | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|---|---|---|---|---|---|---|---|---|
| APPROXIMATE SHAPE | HORIZONTAL SECTIONAL SHAPE OF PIN SECTION | CIRCLE | OVAL | OVAL | OVAL | OVAL | OVAL | OVAL | OVAL | OVAL | OVAL | OVAL | OVAL | OVAL |
| | HORIZONTAL SECTIONAL SHAPE OF UPPER PART | CIRCLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE | ROUND-CORNERED RECTANGLE |
| | HORIZONTAL SECTIONAL SHAPE OF FLANGE SECTION | CIRCLE | OVAL (AXIALLY LONG) | OVAL (AXIALLY LONG) | OVAL (AXIALLY LONG) | OVAL (AXIALLY LONG) | OVAL (AXIALLY LONG) | OVAL (AXIALLY LONG) | OVAL (AXIALLY LONG) | OVAL (AXIALLY LONG) | OVAL (CIRCUMFERENTIALLY LONG) | OVAL (CIRCUMFERENTIALLY LONG) | OVAL (CIRCUMFERENTIALLY LONG) | OVAL (CIRCUMFERENTIALLY LONG) |
| PIN SECTION DIMENSIONS | MAX. AXIAL LENGTH mm | 2.9 | 3.0 | 3.0 | 3.0 | 3.0 | 3.0 | 3.0 | 3.0 | 3.0 | 3.0 | 3.0 | 3.0 | 3.0 |
| | MAX. CIRCUMFERENTIAL LENGTH mm | 2.9 | 1.7 | 1.7 | 1.7 | 1.7 | 1.7 | 1.7 | 1.7 | 1.7 | 1.7 | 1.7 | 1.7 | 1.7 |
| UPPER PART DIMENSIONS | MAX. AXIAL LENGTH mm | 6.3 | 4.3 | 5.0 | 5.5 | 6.0 | 6.5 | 7.0 | 7.5 | 8.8 | 6.0 | 6.4 | 6.6 | 7.0 |
| | MAX. CIRCUMFERENTIAL LENGTH mm | 6.3 | 7.4 | 7.4 | 7.0 | 6.6 | 6.1 | 5.6 | 5.1 | 3.8 | 6.6 | 7.0 | 6.0 | 6.4 |
| FLANGE SECTION DIMENSIONS | MAX. AXIAL LENGTH mm | 8.2 | 9.0 | 9.0 | 9.0 | 9.0 | 9.0 | 9.0 | 9.0 | 9.0 | 7.4 | 7.4 | 7.4 | 7.4 |
| | MAX. CIRCUMFERENTIAL LENGTH mm | 8.2 | 7.4 | 7.4 | 7.4 | 7.4 | 7.4 | 7.4 | 7.4 | 7.4 | 9.0 | 9.0 | 9.0 | 9.0 |
| RELATION BET. UPPER PART SHAPE & FLANGE SECTION SHAPE — SM | AXIAL LENGTH DIFFERENCE mm | 0.98 | 2.35 | 2.00 | 1.75 | 1.50 | 1.25 | 1.00 | 0.75 | 0.10 | 0.70 | 0.50 | 0.43 | 0.20 |
| | CIRCUMFERENTIAL LENGTH DIFFERENCE mm | 0.98 | 0.00 | 0.00 | 0.20 | 0.40 | 0.65 | 0.90 | 1.15 | 1.80 | 1.23 | 1.00 | 1.50 | 1.30 |
| SM | CIRCUMFERENTIAL PROJECTED AREA DIFFERENCE mm | 6.9 | 44.1 | 38.9 | 35.0 | 31.5 | 28.5 | 25.9 | 23.9 | 20.9 | 13.8 | 10.5 | 7.7 | 3.8 |
| HM | AXIAL PROJECTED AREA DIFFERENCE mm | 6.9 | 0.0 | 0.1 | 2.1 | 4.1 | 6.6 | 9.1 | 11.6 | 18.1 | 14.7 | 12.8 | 19.7 | 18.2 |
| SM/HM | CIRCUMFERENTIAL/AXIAL PROJECTED AREA RATIO | 1.00 | 0.00 | 0.00 | 0.06 | 0.13 | 0.23 | 0.35 | 0.49 | 0.87 | 1.07 | 1.22 | 2.57 | 4.74 |
| (HM-SM)/FM | (AXIAL-CIRCUMFERENTIAL PROJECTED AREA DIFFERENCE) / MAX. SECTIONAL AREA OF FLANGE SECTION | 0.00 | 0.70 | 0.62 | 0.53 | 0.44 | 0.35 | 0.27 | 0.20 | 0.04 | -0.01 | -0.03 | -0.18 | -0.22 |
| TIRE PERFORMANCE INDEX | ANTI-STUD-LOSS PERFORMANCE | 100 | 99 | 101 | 103 | 106 | 106 | 103 | 102 | 101 | 98 | 96 | 93 | 90 |

**EP 3 308 983 B1**

**REFERENCES CITED IN THE DESCRIPTION**

**Patent documents cited in the description**

- JP 4088055 B
- US 20040231775 A1
- WO 2014027145 A2
- EP 3287301 A1
- EP 3222441 A1